# EUROPÄISCHE PATENTSCHRIFT

(11) **EP 1 241 144 B1**
(45) Veröffentlichungstag und Bekanntmachung des Hinweises auf die Patenterteilung: **01.06.2005**
(21) Anmeldenummer: 02005984.6
(22) Anmeldetag: 15.03.2002
(51) Int. Cl.: C03C 3/087, C03C 21/00, B32B 17/10

(54) **Verbund-Sicherheitsglas und Verfahren zu dessen Herstellung**
Laminated safety glass and its process of prodction
Verre de sécurité stratifié et procédé de fabrication

(30) Priorität: 16.03.2001 DE 10112859
(43) Veröffentlichungstag der Anmeldung: 18.09.2002
(73) Patentinhaber: HERO-GLAS Veredelungs GmbH, D-26906 Dersum (DE); Jäger, Steffen, Dr., 38122 Braunschweig (DE)
(72) Erfinder: Ross, Hermann, 26906 Dersum (DE); Rosema, Peter, 26871 Papenburg (DE); Jäger, Steffen, 38122 Braunschweig (DE)
(74) Vertreter: Hertz, Oliver, Dr.

(56) Entgegenhaltungen:
- DE-A- 10 007 109
- FR-A- 2 128 031
- US-A- 917 388
- US-A- 1 076 894
- US-A- 4 897 371

## Beschreibung

Die vorliegende Erfindung betrifft ein Verglasungselement mit einem Verbund-Sicherheitsglas.

Verbund-Sicherheitsgläser finden überall dort Verwendung, wo hohe Anforderungen an die Resttrag- bzw. Reststandsicherheit im Versagensfall (konstruktive Sicherheit) sowie an den Schutz des Menschen vor Verletzungen durch den Werkstoff Glas oder auch gegenüber äußeren Angriffen gestellt werden. Die Verbund-Sicherheitsgläser sind aus mindestens zwei Glasscheiben aufgebaut, die durch eine Verbundfolie miteinander verbunden sind. Treten im Anwendungsfall zusätzlich noch thermische Belastungen und/oder mechanische Stoß-, Schlag- oder Biegebeanspruchungen auf, werden gehärtete Gläser eingesetzt.

Einer besonders hohen und komplexen Beanspruchung - und dies über einen sehr langen Zeitraum von mehr als 20 Jahre - sind Verglasungen im Schiffbau ausgesetzt. Neben den schon oben genannten Anforderungen müssen diese Sicherheitsgläser zusätzlich den sehr hohen thermischen Belastungen (z. B. hohe Oberflächentemperaturen, Temperaturwechsel usw.) in den unterschiedlichsten Klimaregionen der Welt standhalten. Von besonderer Bedeutung sind die durch Winddruck, Windsog, Wasserdruck oder deren Kombinationen auftretenden extrem hohen mechanischen Lasten. Diese können bis zu dem Zehnfachen und darüber der für den Hochbau typischen Werte betragen.

Bisher werden die Verbund-Sicherheitsgläser im Schiffbau aus Einscheiben-Sicherheitsglas (ESG) hergestellt. Mitunter werden auch teilweise noch monolithische Einscheiben-Sicherheitsgläser verwendet. Die eingesetzten Verbund-Sicherheitsgläser bestehen typischerweise aus mindestens zwei gleichdicken ESG-Scheiben, die durch eine ca. 1.5 mm dicke Verbundfolie zu einem Glasverbund verarbeitet werden. Unter ESG ist dabei ein thermisch vorgespanntes oder gehärtetes Glas zu verstehen. Die höhere Festigkeit des ESG wird dadurch erreicht, dass die dem Glas gefährlich werdenden Zugspannungen in der Oberfläche gemildert werden. Dies wird erreicht, indem die Glasoberfläche durch eine geeignete Behandlung unter Druckspannungen gesetzt wird. Ein Bruch tritt erst dann ein, wenn eine Beanspruchung mindestens die Höhe der Druckspannungen erreicht hat.

Die eigentliche ESG-Herstellung erfolgt durch einen definierten Wärmebehandlungsprozess. Dabei wird das Glas zunächst gleichmäßig auf Temperaturen nahe dem Erweichungspunkt erwärmt und anschließend durch eine schlagartige konvektive Abkühlung mittels kalter Luft abgeschreckt. Auf diese Weise lässt sich im Glas eine Spannungsverteilung derart erzeugen, bei der die Glasoberfläche unter Druckspannung und das Innere unter Zugspannung gesetzt werden. Es ist bekannt, dass eine derartige Spannungsverteilung im Glas zu einer verbesserten Temperatur-Wechsel-Beständigkeit sowie einer erhöhten Stoß- und Schlagfestigkeit führt. Die Erhöhung der Biegefestigkeit des ESG gegenüber ungehärtetem Floatglas (ESG: 120 Nmm⁻²; Floatglas: 45 Nmm⁻²) stellt die entscheidende Größe für die höhere mechanische Belastbarkeit dar.

Üblicherweise wird zur zerstörungsfreien Prüfung der Festigkeit der für den Schiffbau verwendeten Gläser die Vorschrift DIN ISO 614 herangezogen. Dabei wird mittels eines Prüfstempels mit einer genau spezifizierten Andruckfläche von ∅ 12,5 mm eine sich stetig verändernde Kraft lokal auf die Mitte des Prüflings ausgeübt. Es liegt nur dann ein positives Prüfergebnis vor, wenn die Scheibe nach dem Test nicht zerbrochen ist und keine Anzeichen einer Beschädigung aufweist. Es ist nachteilig, dass bei diesem Prüfverfahren nur sehr kleine Glasflächen, typischerweise mit einem Nenn-Durchmesser von ca. 250 mm, eingesetzt werden können. Nicht zuletzt ist dies darauf zurückzuführen, dass die durch den Prüfstempel ausgeübte Kraft bei größeren Scheibenabmessungen von einigen m² nahezu als punktförmig betrachtet werden muss. Auf einem solchen Prüfling entsteht ein sehr ungleichmäßiges, ortsabhängiges Spannungsfeld, so dass sich letztendlich keine zuverlässigen Aussagen über die Festigkeit des Glases erhalten lassen. Eine Übertragung der mit diesem Prüfverfahren erzielten Ergebnisse auf die realen Beanspruchungen im Schiffbau (siehe Winddruck, Windsog, Wasserdruck usw.) ist deshalb nicht möglich. Darüber hinaus können auch die mit dem Prüfverfahren nach DIN ISO 614 an kleinen Scheiben erhaltenen Ergebnisse nicht auf großformatigere Gläser mit einer Fläche von 1 m² bis 2 m² und größer übertragen werden, da bekanntermaßen die an kleineren Oberflächenbereichen erhaltenen Prüfergebnisse auf Grund der statistischen Verteilung der Oberflächendefekte meist bedeutend höher liegen.

Die bisher im Schiffbau verwendeten Verbund-Sicherheitsglassysteme weisen eine Reihe von Nachteilen auf. Dies äußert sich vor allem darin, dass die thermisch vorgespannten Einzelgläser aus statischen Gründen sehr große Dicken von typischerweise 15 bis 19 mm aufweisen. Diese extremen Glasdicken machen mitunter sehr aufwendige und kostenintensive bauliche Unterkonstruktionen erforderlich, führen zu erheblichen Montagekosten und erschweren die Weiterveredelung zu multifunktionellem Isolierglas. Darüber hinaus führen die damit verbundenen enorm hohen Gewichte der Verbund-Sicherheitsgläser zu deutlich höheren laufenden Kosten beim Betrieb der Schiffe (z. B. Treibstoffkosten).

Bei den bisher verwendeten Verbund-Sicherheitsgläsern erweist sich als besonders nachteilig, dass die Bruchgrenzen der Gläser unter Belastungsbedingungen keine festen Werte annehmen, sondern größeren Schwankungen unterliegen. Erfahrungsgemäß treten bei den herkömmlichen Systemen deutliche Schwankungen von bis zu 100 % und sogar darüber auf. Um jedoch den Sicherheitsanforderungen zu genügen, werden bei der statischen Auslegung der Verglasungselemente in der Praxis zusätzliche Sicherheitsaufschläge von ca. 200 % bis 400 % je nach Anwendungsfall gemacht. Dies führt zu einer weiteren Erhöhung des Gewichtes der Verglasungselemente und somit letztendlich zu einem Ansteigen der Kosten für das einzusetzende Material, die Montage usw.. Wenn es nun gelingt, diese Schwankungstoleranzen deutlich zu reduzieren, sollte es möglich sein, höhere Sicherheitsstandards bei gleichzeitig geringeren Glasdicken und somit einer besseren Wirtschaftlichkeit zu erhalten.

Als ein weiterer Nachteil der thermisch vorgespannten Gläser haben sich die herstellungsbedingten optischen Anisotropien herausgestellt. Hierbei handelt es sich um lokal verteilte Spannungszonen bzw. -felder, die unter polarisiertem Licht zu Doppelbrechungen und Bildverzerrungen führen. Da das Tageslicht in einigen Regionen der Welt einen mitunter sehr erheblichen Anteil an polarisiertem Licht enthält, können sich derartige optische Erscheinungen in starkem Maße beeinträchtigend auf die Sicherheit, z. B. beim Steuern und Rangieren des Schiffes, auswirken. Weiterhin ist von Nachteil, dass die zwangsläufig mit dem thermischen Vorspannverfahren verbundene Verwerfung bzw. Welligkeit der Gläser sowie auch weitere mechanische Schädigungen an den Glasoberflächen zu unerwünschten visuellen Verzerrungen - v. a. im Reflexionslicht - führen können. Insbesondere bei größeren Glasflächen, die zunehmend in den Bereichen des Passagier- und des Yachtschiffbaues anzutreffen sind, wirken sich diese Erscheinungen sehr störend auf das architektonisch-ästhetische Gesamtbild aus. Ausgesprochen nachteilig ist auch, dass mit dem thermischen Vorspannprozess keine in beliebigen Formen und Größen gebogene bzw. gekrümmte Glaskörper in ausreichender Qualität hergestellt werden können.

Es ist auch bekannt, gehärtetes Glas durch chemische Vorspannung herzustellen (Chemically Strengthened Glass; CSG). CSG ist gehärtetes Glas, dessen Herstellung auf Ionenaustauschvorgängen beruht. Zur Erzeugung von Druckspannungen im Glas werden im Glas vorhandene Ionen mit kleinem Durchmesser an der Oberfläche durch Ionen mit größerem Durchmesser ersetzt. Beim chemischen Härten beispielsweise von Natron-Kalkglas (Floatglas) wandern in einem Kaliumsalzbad Na⁺-Ionen durch Diffusion aus dem Glas in das Salzbad und K⁺-Ionen aus dem Bad in das Glas. Dies kann bei Temperaturen sowohl oberhalb als auch unterhalb der Transformationstemperatur T_{G} des Glases (typischerweise T_{G} > 530°C) erfolgen. Die Herstellung chemisch gehärteten Glases war bisher auf geringe Glasdicken unterhalb 3 mm beschränkt.

Die Herstellung gehärteten Glases durch chemisches Vorspannen ist auch aus US-A-1 076 894, US-A-4 897 371, US-A-917388 und FR-A-2 128 031 bekannt.

Die Aufgabe der vorliegenden Erfindung ist es, ein verbessertes Verglasungselement auf der Grundlage eines Verbund-Sicherheitsglassystem anzugeben, mit dem die Nachteile herkömmlicher Verbund-Sicherheitsgläser überwunden werden.

Diese Aufgabe wird durch Verglasungselemente mit den Merkmalen gemäß dem Patentanspruch 1 gelöst. Vorteilhafte Ausführungsformen und Anwendungen der Erfindung ergeben sich aus den abhängigen Ansprüchen.

Die Grundidee der Erfindung ist es, ein Verglasungselement mit einem Verbund-Sicherheitsglassystem mit mindestens zwei Gläsern bereitzustellen, die durch mindestens eine Sicherheitsfolie miteinander verbunden sind, wobei die Gläser jeweils eine unterhalb der Glas-Transformationstemperatur gehärtete oder vorgespannte Oberfläche, die durch Oberflächendruckspannungen in das Glasinnere hinein bis zu einer Grenztiefe von weniger als 150 µm charakterisiert sind und im Glasinneren jenseits der Grenztiefe keine oder nur sehr geringe innere Zugspannungen besitzen. Es werden Gläser verwendet, die über den sogenannten Floatprozess hergestellt sind (Floatglas) und entsprechend eine zinnhaltige Glasoberfläche aufweisen. Mindestens ein Glas, das eine äußere Glasscheibe des Verbund-Sicherheitsglassystems bildet, ist so angeordnet, dass die zinnhaltige Glasoberfläche nach außen gerichtet ist. Allgemein sind die zinnhaltigen Glasoberflächen, mindestens die des äußeren Glases, nach außen und in einem Fenster- oder Rahmenaufbau zur Belastungsseite hin angeordnet.

Unerwarteterweise hat sich herausgestellt, dass sich Verbund-Sicherheitsglas mit diesen Merkmalen durch eine mechanische Belastbarkeit auszeichnet, die um mindestens 250%, typischerweise um 300% bis 500% und drüber, gegenüber den herkömmlichen thermisch vorgespannten ESG-Glassystemen gesteigert ist. Damit werden die dargestellten Nachteile herkömmlicher Glassysteme überwunden.

Gemäß bevorzugten Ausführungsformen der Erfindung ist die Grenztiefe im Bereich zwischen 20 µm und 80 µm, besonders bevorzugt zwischen 20 µm und 50 µm gewählt. Sie beträgt in jedem Falle mindestens 10 µm. Die Oberflächendruckspannungen liegen vorzugsweise zwischen 300 Nmm⁻² und 800 Nmm⁻², bevorzugt zwischen 300 Nmm⁻² und 600 Nmm⁻² liegen, betragen aber mindestens 300 Nmm⁻². Die inneren Zugspannungen sind vorzugsweise kleiner als rd. 30 Nmm⁻².

Gemäß weiteren bevorzugten Ausführungsformen der Erfindung werden die Oberflächendruckspannungen durch chemisches Härten mit Ionenaustauschtiefen entsprechend der genannten Grenztiefe gebildet.

Das Verbund-Sicherheitsglassystem besteht vorzugsweise aus einer mehrfachen Anordnung von Glasverbünden und kann wahlweise aus planem, gebogenem bzw. gewölbtem Glas in beliebigen Größen und Formen aufgebaut sein.

Gemäß einer besonders vorteilhaften Ausführungsform der Erfindung ist das gehärtete Glas mit einer Scheibendicke vorzugsweise im Bereich von 3 mm bis 19 mm, insbesondere von 4 mm bis 15 mm hergestellt und im zugehörigen Rahmen- oder Fassungsaufbau zur Belastungsangriffsseite hin angeordnet. Gegenstand der Erfindung ist ein Verglasungselement, insbesondere ein Rahmen- oder Fassungsaufbau oder ein Fenster, mit dem oben genannten Verbund-Sicherheitsglassystem. Der Rahmen oder die Fassung kann bspw. als mechanische Führung oder als Klebung gebildet sein.

Die Härtung bzw. Vorspannung des Glases wird durch eine chemische Oberflächenmodifizierung und/oder mittels Oberflächenbeschichtung mit einer Gleichmäßigkeit der lateralen Spannungsverteilung erzielt, die mindestens besser als 5 %, bevorzugt mindestens besser als 2 % über der gesamten Glasoberfläche ist.

Die Erfindung besitzt die folgenden Vorteile. Durch die Erfindung ist es nun vor allem möglich, multifunktionelle Verglasungseinheiten mit Verbund-Sicherheitsgläsern bei deutlich geringeren Glasdicken und somit bei erheblich verringertem Gewicht herzustellen, ohne dass Einbußen hinsichtlich der geforderten statischen Anforderungen hingenommen werden müssen. Als besonderer Vorteil hat sich ergeben, dass das erfindungsgemäße Verglasungselement mit Verbund-Sicherheitsglas nahezu ohne Einschränkungen auf beliebige geometrische Formen und Größen und letztendlich sogar auch auf gebogenes bzw. gewölbtes Glas übertragbar ist. Besonders vorteilhaft an den chemisch oder mittels Beschichtung gehärteten Gläsern ist, dass diese unterhalb der Glas-Transformationstemperatur hergestellt werden können. Dadurch sind einerseits Deformationen oder Formveränderungen des Glases während des Vorspannvorganges ausgeschlossen. Andererseits können sich keine visuell erkennbaren Beeinträchtigungen in den optischen Eigenschaften ausbilden.

Zur Herstellung erfindungsgemäß verwendeter gehärteter Gläser werden an sich aus dem Stand der Technik bekannte Verfahren unter Einstellung bestimmter Prozessbedingungen verwendet. Beispielsweise kann das Glas durch das Erzeugen einer einige µm-dicken Schicht mit geringerem Ausdehnungskoeffizienten in der gewünschten Weise gehärtet werden. Dies lässt sich beispielhaft durch eine Verarmung der Glasoberfläche an Alkaliionen durch z. B. Ätzen, Plasmabehandlung, Wasserstoff-Austausch oder dergleichen erreichen. Andere Verfahren beinhalten das Auftragen spezieller Schichten auf den Oberflächen oder eine chemische Oberflächenmodifizierung und/oder Oberflächenbeschichtung.

Als ganz besonders geeignet zur Umsetzung der Erfindung hat sich chemisch vorgespanntes Glas (Chemically Strengthened Glass; CSG) herausgestellt. Durch die erfindungsgemäße Wahl geeigneter Prozessparameter (z. B. Temperatur, Salzbadkonzentration, Zeit, Glaszusammensetzung usw.) lassen sich insbesondere die Ionenaustauschtiefe, die mittlere Ionenkonzentration usw. in definierten Bereichen einstellen.

Ein wichtiges Merkmal der erfindungsgemäß verwendeten chemisch vorgespannten Gläser besteht insbesondere darin, dass diese vorzugsweise eine Ionenaustauschtiefe von mindestens 10 µm bis maximal 150 µm aufweisen, bevorzugt die Austauschtiefe zwischen 10 µm und 80 µm liegt, besonders bevorzugt zwischen 20 µm und 50 µm.

Ein weiteres wichtiges Merkmal ist, dass durch den Ionenaustausch an der Glasoberfläche eine K₂O-Konzentration von vorzugsweise mindestens 3 Gew.-% erzeugt wird, vorzugsweise mindestens zwischen 5 Gew.-% und 20 Gew.-% liegt. Auf diese Weise ist sichergestellt, dass sich im Oberflächenbereich der Gläser eine genügend hohe Druckspannung aufbauen kann.

Ein besonders wichtiges Merkmal des erfindungsgemäßen Verglagsungselementes mit VerbundSicherheitsglas besteht in der definierten Orientierung der zinnhaltigen Glasoberflächen innerhalb des Glasverbundes. Besonders gute Ergebnisse sowohl hinsichtlich der erreichbaren Belastungsgrenzwerte als auch hinsichtlich deren Toleranzbereiche lassen sich insbesondere dadurch erreichen, dass die zinnhaltige Glasoberfläche von mindestens der äußeren Glasscheibe zur Belastungsangriffsseite hin angeordnet ist.

Die Verwendung der erfindungsgemäßen Verglasungselemente mit Verbund-Sicherheitsglas ist vor allem bei solchen Anwendungen von Bedeutung, bei denen höchste Anforderungen sowohl an die mechanischen, sicherheitstechnischen als auch optischen Eigenschaften bei gleichzeitiger Gewichtsreduzierung gestellt werden. Die Anwendungsgebiete reichen dabei über den Schiff- und Yachtbau, Über-Kopf-Verglasungen, über Brüstungen und begehbarem Glas bis hin zu Verglasungssystemen im Hochhausbau.

Die erfindungsgemäß verwendeten chemisch vorgespannten Gläser sind auf Grund ihrer hohen Temperaturunterschiedsfestigkeit auch ganz besonders gut geeignet für die Verwendung als G-Brandschutzgläser entspr. DIN 4102 Teil 13.

Weitere Einzelheiten und Vorteile der Erfindung ergeben sich aus der Beschreibung der beigefügten Zeichnungen. Es zeigen:
- Figur 1:: ein schematische Illustration einer Prüfanordnung ;
- Figur 2:: eine schematische Schnittdarstellung einer ersten Ausführungsform erfindungsgemäß verwendeten Verbundglases;
- Figuren 3a,b bis 5a-d:: schematische Schnittdarstellungen weiterer Ausführungsformen erfindungsgemäß verwendeten Verbundglases;
- Figur 6:: eine Kurvendarstellung experimenteller Ergebnisse von Belastbarkeitstests; und
- Figur 7:: eine schematische Schnittdarstellung einer Ausführungsform eines erfindungsgemäßen Verglasungselements.

### Herstellung erfindungsgemäßer Verglasungselemente

Die Herstellung der erfindungsgemäß verwerdeten Verbund-Sicherheitsgläser wird im folgenden näher erläutert. Nach dem Zuschnitt der Gläser werden die Glasscheiben bei Bedarf zunächst mit den gewünschten geometrischen Formen (z. B. Bohrungen usw.) versehen. Daran anschließend sind sämtliche Kanten mit einer hohen Oberflächengüte zu schleifen und zu polieren, da eine nachträgliche Bearbeitung nicht mehr möglich ist. Danach werden die Gläser durch das genannte Ionenaustauschverfahren gehärtet. Es lassen sich die verschiedensten Glastypen, wie z. B. Natron-Kalkglas, weitere Alkali-Kalkgläser, Borosilikatglas usw. verwenden. Wichtig ist, dass es die chemische Struktur und Zusammensetzung der Gläser zulässt, die angegebenen Ionenaustauschtiefen und mittleren Konzentrationsverhältnisse so einzustellen, dass im Glas ein vergleichbarer Spannungszustand bzw. -verlauf (hohe Druckspannungen an der Oberfläche, geringe Zugspannungen im Innern usw.) entsteht.

Dies ist z. B. der Fall bei Kalk-Natron-Gläsern mit höherem Alkaligehalt. Besonders vorteilhaft ist, wenn die im Glas vorhandenen Alkalioxide zusammengenommen zwischen 8 Gew.% bis max. 30 Gew.% liegen, wobei der Na₂O-Gehalt vorzugsweise auf eine Konzentration zwischen mindestens 8 Gew.-% bis ca. 22 Gew.-%. eingestellt ist. Geeignet sind Gläser, die in ihrer mittleren Zusammensetzung z. B. folgende typische Hauptbestandteile enthalten: Na₂O - 8 bis 22 Gew.-%; K₂O - 0 bis 8 Gew.-%; Al₂O₃ - 0 bis 6 Gew.-%; CaO 0 bis 13 Gew.-%; MgO - 0 bis 10 Gew.-%; Fe₂O₃ - 0 bis 0,5 Gew.-%; SiO₂ - Rest zu 100 Gew.-%. Das verwendbare Glas kann aber auch noch andere Bestandteile enthalten wie z. B. B₂O₃ (0 - 35 Gew.%), TiO2 (0 - 10 Gew.%), ZnO (0-8 Gew.%) oder Bestandteile mit einem Gewichtsanteil unterhalb 3% wie z. B. SO₃, F₂, SnO₂, ZrO₂, BaO usw.. Besonders niedrige Eisenoxidanteile von mindestens < 0,25 Gew.-% sind zu favorisieren, um besonders gute Farbneutralität und hohe Lichtdurchlässigkeiten zu erzielen.

Zum chemischen Vorspannen werden die Gläser in einem Alkalisalzbad bei Temperaturen im Bereich von 400°C bis 520°C, besonders bevorzugt von 450°C bis 500°C und für eine Zeitspanne von ca. 2 h bis 20 h, bevorzugt zwischen 4 h und 8 h, belassen. Bei Borosilikatgläsern läßt sich auch eine höhere Badtemperatur zwischen 520°C und ca. 660°C verwenden.

Als stabiles Salzbad ist bspw. eine KNO₃-Schmelze mit einer Konzentration von 100 Gew.-% bis mindestens 90 Gew.-%, vorzugsweise oberhalb 95 Gew.-%, geeignet. Unter diesen Herstellungsbedingungen werden die bevorzugten Spannungsverhältnisse im Glas erreicht. Bei geringeren Badtemperaturen und geringeren Salzkonzentrationen werden entsprechend höhere Verweilzeiten gewählt.

Durch Vergleichsmessungen der Konzentrationstiefenprofile an ungehärtetem und chemisch gehärtetem Glas, die mittels der EP-MA-Methode (Electron-Probe-Micro-Analysis) an Querschliffen durchgeführt wurden, hat sich gezeigt, dass die Konzentration von K₂O typischerweise nahezu monoton zur Glasmitte hin abfällt. Z. B. ließ sich bei einem Glas mit einer Na₂O-Ausgangskonzentration von ca. 14 Gew.-% ein nahezu vollständiger Austausch der Natriumionen gegen Kaliumionen an der Oberfläche (Meßergebnisse: ca. 12 Gew.-% K₂O; ca. 2 Gew.-% an Na₂O) feststellen. Bis zur gemessenen Eindringtiefe bei 21 µm fiel die K₂O-Konzentration dann in erster Näherung linear ab und erreichte dort eine Konzentration von ca. 0,5 Gew.-%.

Die Glasverbünde nach der Erfindung lassen sich letztendlich in vorteilhafter Weise dadurch herstellen, dass die Gläser in einem Autoklav-Laminierverfahren weiterverarbeitet werden. Dabei wird zunächst die Sandwichstruktur "gehärtetes Glas / Sicherheitsfolie / gehärtetes Glas" zusammengelegt und durch Einwirkung von Wärme und Druck zu einem Vorverbund zusammengefügt. Anschließend werden die Glaseinheiten dem eigentlichen Autoklavprozess unterzogen, wobei für die Prozessführung erfindungsgemäß die Drücke vorzugsweise zwischen 6 bar und 16 bar, bevorzugt zwischen 8 bar und 14 bar sowie die Temperaturen zwischen von 130°C bis 155°C, bevorzugt zwischen 130°C und 145°C einzustellen sind.

Als besonders vorteilhaft hat sich erwiesen, wenn bei der Herstellung des Verbundes ein Vakuum vorhanden ist. Durch das Vakuum lassen sich z. B. kontaminiertes Wasser und Lösungsmittel entfernen, so dass eine deutlich bessere Haftung und somit auch höhere Scherkräfte zwischen der Folie und dem Glas erreicht werden. Darüber hinaus wirkt sich das Vakuum verbessernd auf die Reißfestigkeit der Folie aus. Bei den Untersuchungen zum Laminieren hat sich gezeigt, dass auf Grund der verbesserten Haftung zwischen der Glasoberfläche und Folie besonders die Verwendung von Folien mit einem verringertem Restwassergehalt, der vorzugsweise von 0,25 Gew.% bis 0,35 Gew.% eingestellt wird, vorteilhaft ist.

Auch mit einem autoklavfreien Prozeß, d. h. nur unter Einwirkung von Vakuum und Temperatur, ließen sich die Glasverbünde mit den geforderten Eigenschaften herstellen. Ein anderes Laminierverfahren oder auch dessen gattungsgemäße Verfahren, die z. B. im Bereich der Photovoltaik eine breite Verwendung gefunden haben, können ebenfalls eingesetzt werden. Bei diesen Verfahren wird der gleichmäßige Druck, der typischerweise zwischen ca. 0,5 bar und 8 bar liegt, durch das Aufpressen einer flexiblen Membran erreicht.

Als besonderer Vorteil hat sich erwiesen, wenn die zur späteren Belastungsseite hin abgewandte Glasscheibe während des gesamten Fertigungsprozesses immer frei (nach oben) liegt. Dadurch lassen sich zusätzliche herstellungsbedingte mechanische Schädigungen an der im Anwendungsfall besonders durch Zugkräfte beanspruchten und somit besonders kritischen Glasoberfläche weitestgehend vermeiden. Vorteilhaft ist auch, durch zusätzliches Auflegen von z. B. einer geeigneten Schutzfolie oder ähnlichem die Glasoberfläche vor Beschädigungen zu schützen.

Nach einer Zwischenlagerung von mindestens 24 h werden zunächst hergestellte Testmuster einem zur Simulation der realen Einbaubedingungen geeigneten Belastungstest unterzogen. Vorteilhafterweise werden die Testmuster parallel zur Produktion unter den gleichen Bedingungen gefertigt. Bei den Prüfungen sind weder Risse, Brüche, Ausmuschelungen noch sonstige sichtbare Beschädigungen zulässig.

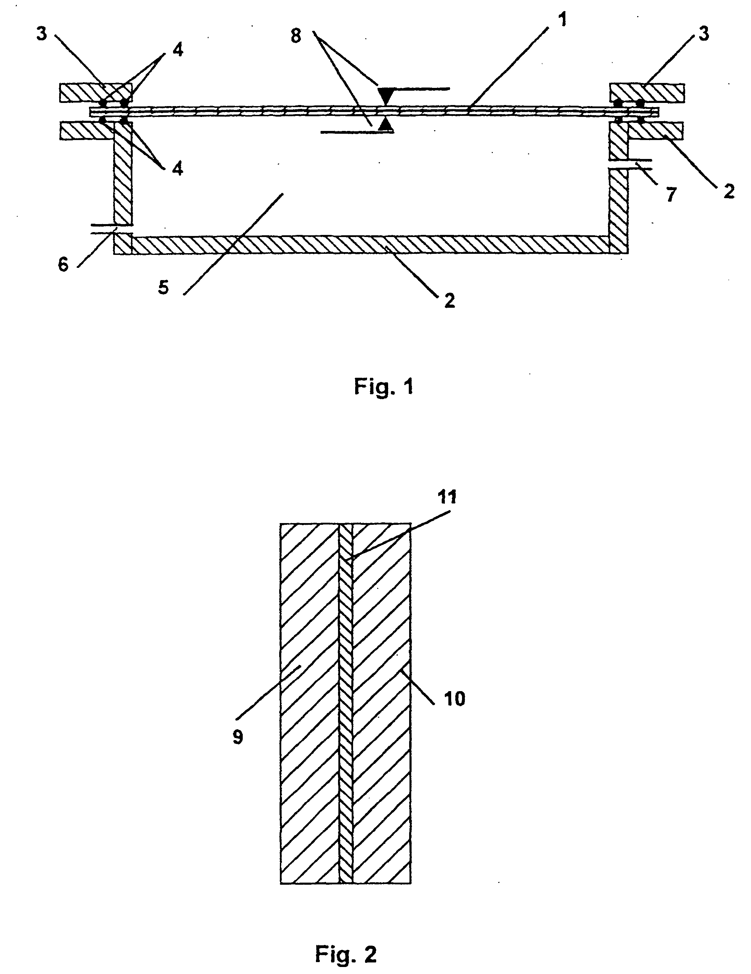

Der Aufbau eines Prüfstandes zum Belastungstest der Testmuster ist in Figur 1 dargestellt. Der Prüfling (1) wird auf einen steifen, vakuumdichten Grundkörper (2) aufgelegt. Die geometrische Form des Grundkörpers kann dabei nahezu beliebig gestaltet sein. Es hat sich von Vorteil erwiesen, die Größe der Grundfläche so zu bemessen, dass diese dem späteren Anwendungsfall möglichst nahe kommt. Als ausreichend ist jedoch schon eine Grundfläche mit den charakteristischen Abmessungen von ca. 1.000 mm x 1.000 mm. Der Prüfstand kann wahlweise horizontal oder vertikal betrieben werden.

Zum Anpressen des Prüfkörpers sowie zur Herstellung der Dichtheit wird auf die Oberseite des Grundkörpers 1 ein formangepasstes Gegenstück 3 aufgelegt und mit dem Grundkörper durch eine Schraubverbindung mit fest vorgegebenem Drehmoment (z. B. 100 Nm) verbunden. Sowohl zwischen Grundkörper und Prüfling als auch zwischen Prüfling und Gegenstück sind Gummidichtungen 4 eingebracht. Neben der Sicherstellung der Dichtheit der Druckkammer 5 haben die Gummidichtungen die Aufgabe, den direkten Kontakt zwischen dem Glas und dem Metall und somit dessen Zerstörung - insbesondere im Belastungsfall - zu vermeiden. Zur Herstellung der Dichtheit können auch elastische Materialien, z. B. polyurethanhaltige Ein- oder Zwei-Komponenten-Klebstoffe, verwendet werden. In Anlehnung an die realen Einbaubedingungen und die Norm DIN ISO 614 werden die Glasverbünde so eingespannt, dass keine der Kanten weniger als 25 mm vom inneren Rand der Grundkörpers bzw. Gegenstücks entfernt ist. Es wurden typische Abstände von ca. 50 mm verwendet. Am Grundkörper sind zusätzliche Flansche wahlweise für den Gaseinlass oder den Vakuumanschluss 6 sowie einem Sicherheitsventil 7 angebracht. Neben dem Medium Gas kann auch Wasser oder eine andere Flüssigkeit zur Erzeugung des gleichmäßigen Druckes innerhalb der Versuchsapparatur benutzt werden. Zur Erfassung der Druckwerte lassen sich die notwendigen Manometer bzw. Vakuumdruckmessgeräte anflanschen. Für die Messung der Durchbiegung des Prüfkörpers unter stationärer bzw. dynamischer Belastung wurden mechanische Wegaufnehmer 8 in der Mitte des Prüflings positioniert. Die Steuerung der Apparatur sowie die Aufnahme und Verarbeitung der Messwerte erfolgen über einen Computer.

Mit der vorgeschlagenen Apparatur lassen sich die verschiedensten realen Belastungssituationen oder auch Kombinationen derer simulieren. Während z. B. durch die Erhöhung des Kammerdruckes eine Simulation des Winddruckes möglich ist, kann bei Evakuieren desselben der Einfluss von Windsog auf die Verbund-Sicherheitsglassysteme untersucht werden. In Abhängigkeit von der Größe und Art des Druckes entsteht eine mehr oder weniger große konvexe bzw. konkave Wölbung. Durch die Messung der Durchbiegung in der Probenmitte, die Bestimmung der Grenzdrücke, die letztendlich zum Versagen bzw. Bruch der Glasverbünde führen, durch die visuelle Bewertung des Bruchbildes usw. lassen sich Rückschlüsse auf das Belastungsverhalten unter realen Einbaubedingungen ziehen. Als weitere Kenngröße zur Beurteilung des Belastungsverhaltens der Glasverbünde wird die Reststand- und Resttragfähigkeit verwendet.

Ein besonderer Vorteil bei diesem Prüfverfahren besteht in der äußerst gleichmäßigen sowie druck- und richtungsunabhängigen Beanspruchung der Probe. Selbst im Falle größerer Durchbiegungen im Bereich der Probenmitte (ca. in der Größenordnung der halben Probendicke und darüber) werden jegliche lokale Spannungsüberhöhungen vermieden. Letztgenanntes tritt sowohl bei der DIN ISO 614 als auch bei den für Flachglas im Bauwesen gültigen Normen (siehe Doppelring-Biegeversuch entspr. EN 1288-1 bis -5) auf Grund der dort eingesetzten Belastungseinrichtungen in Erscheinung.

Als ein ganz besonderer Vorteil hat sich herausgestellt, dass sich das beschriebene Prüfverfahren hervorragend zur Durchführung von Vorprüfungen im Rahmen einer Qualitätskontrolle direkt in der Produktion einsetzen lässt.

### Ausführungsbeispiel 1

Die vorab gehärteten Gläser wurden unter identischen Bedingungen nach dem oben beschriebenen Verfahren zu Verbund-Sicherheitsglas verarbeitet. In diesem Beispiel wurden als Einzelgläser die Glastypen ESG sowie chemisch vorgespanntes Glas (CSG) mit den Abmessungen 1.200 mm x 1.600 mm und den Dicken 3, 4, 5, 6, 8, 10, 12, 15 und 19 mm verwendet. Die Kanten der Einzelgläser waren prinzipiell geschliffen und poliert. Zur Vermeidung des Spontanbruches auf Grund möglicher Nickel-Sulfid-Einschlüsse wurden die verwendeten ESG-Scheiben vorab einem Heat-Soak-Test gemäß DIN 18 516 Teil 4 unterzogen.

Es wurde der symmetrische Verbundglasaufbau "Glas 9 / Folie 11 / Glas 10" entspr. Figur 2 wie folgt gewählt:
ESG / PVB (0,38 mm; 0,76 mm; 1,52 mm) / ESG bzw.
CSG / PVB (0,38 mm; 0,76 mm; 1,52 mm) / CSG.

Es lassen sich auch asymmetrische, d. h. aus unterschiedlich dicken Einzelgläsern aufgebaute Glasverbünde benutzen. Bei derartigen Verbundglassystemen hat sich aus statischen Gründen als besonders vorteilhaft herausgestellt, wenn die dickere Scheibe stets zur Belastungsangriffsseite hin angeordnet ist.

Aber auch eine gleichzeitige Kombination von chemisch und thermisch vorgespanntem Glas ist erfindungsgemäß möglich. Zu berücksichtigen ist in diesem Fall jedoch, dass dabei gewisse Einbußen in den optischen Eigenschaften hingenommen werden müssen. Bei einer derartigen Anordnung hat sich von Vorteil erwiesen, wenn das chemisch vorgespannte Glas nach außen hin angeordnet und so dimensioniert ist, dass es die mechanischen Lasten fast vollständig abtragen kann. Es ist in diesem Fall besonders wichtig, dass die zinnhaltigen Oberflächen, mindestens die der äußeren Glasscheibe, prinzipiell zur Lastangriffsseite orientiert sind/ist.

Für die Untersuchungen fand eine rechteckige Grundform der Prüfkammer Verwendung. Folgende äußere Umgebungsbedingungen wurden eingehalten: relative Luftfeuchtigkeit: 40 bis 70 %; Umgebungstemperatur: 18 bis 25 °C; Lagerzeit vor den Tests: mind. 24 h. Durch Einlass von trockener Luft wurde in der Kammer der Druck solange erhöht, bis der Glasverbund durch Bruch zerstört wurde. Der so bei jeweils mehreren Proben erhaltene kritische Druck wurde statistisch ausgewertet und als quantitative Größe zur Bestimmung der Grenzbelastbarkeit herangezogen. Darüber hinaus wurde das jeweilige Bruchbild einer visuellen Bewertung unterzogen.

Die Untersuchungen haben ergeben, dass sich bei Verwendung der erfindungsgemäß verwendeten Verbund-Sicherheitsgläser (z. B. chemisch vorgespanntes Glas) durchschnittlich um mehr als 250 % höhere Belastbarkeitsgrenzen gegenüber dem herkömmlichen ESG erreichen lassen. Es ist zwar bekannt, dass chemisch vorgespannte Gläser (CSG) eine um ca. 50 % bis 100 % höhere Biegespannung als die thermisch vorgespannten besitzen, weshalb eine Erhöhung der Belastbarkeit bei Verwendung von CSG durchaus plausibel ist. Dass jedoch eine derart große Steigerung der Grenzbelastbarkeit auf Mittelwerte von 250 % und darüber beobachtet wird, lässt sich mit dieser physikalischen Größe alleine nicht erklären. Auch bei einem direkten Vergleich von ESG- und CSG-Gläsern, die so ausgewählt wurden, dass einerseits nahezu gleiche Biegespannungswerte vorlagen und andererseits auch mögliche Einflüsse auf Grund von Oberflächenbeschädigungen ausgeschlossen werden konnten, ließen sich deutlich höhere Belastungsgrenzen für die chemisch vorgespannten Gläser nachweisen. Die Untersuchungen zur Schwankungs- bzw. Toleranzbreite der Grenzbelastbarkeiten ergaben eine deutliche Verbesserung bei Verwendung von chemisch vorgespannten Gläsern. Die Schwankungen ließen sich in dieser Ausführungsform schon auf Werte zwischen 15 % und 30 % reduzieren.

Bei der Auswertung der durchgeführten Experimente hat sich überraschenderweise herausgestellt, dass es von ganz besonderem Vorteil ist, wenn im Verbund-Sicherheitsglas nur gehärtetes Glas mit einem ganz speziellen Spannungsprofil verwendet wird. Demnach ist es vorteilhaft, wenn die Spannungsverhältnisse so eingestellt werden, dass einerseits hohe Druckspannungen an der Oberfläche erzeugt werden, die jedoch dann sehr rasch (nahezu stufenförmig) zum Kern hin abfallen und andererseits zusätzlich im Glasinneren keine oder nur geringe Zugspannungen (vorzugsweise kleiner ca. 30 Nmm⁻²; vergleichbar zu normalem Floatglas) existieren. Dadurch entstehen bei einer Biegebeanspruchung im Innern nicht gefährlich hohe, mitunter bruchauslösende Zugspannungen, wie es sich in den Experimenten für die thermisch gehärteten Proben gezeigt hat.

Bei der Analyse von Bruchbildern ließ sich ferner feststellen, dass zwischen der Höhe der Belastungsgrenze des Glasverbundes und der Homogenität der in die Glasoberfläche eingebrachten Druckspannungen eine deutliche Abhängigkeit existiert. Je besser es beim Vorspannen gelingt, eine gleichmäßige Druckspannungsverteilung über die gesamte Glasoberfläche zu erzeugen, desto höhere Grenzbelastungen lassen sich letztendlich erreichen. Gerade beim ESG zeigen sich größere lokale Schwankungen im Spannungsfeld, deren Ursache vermutlich im konvektiven Abkühlprozeß zu suchen ist. Es hat sich als besonders vorteilhaft erwiesen, wenn eine Gleichmäßigkeit der lateralen Spannungsverteilung von mindestens besser als 5 %, bevorzugt mindestens besser als 2 % über der gesamten Glasoberfläche vorliegt. Durch die erfindungsgemäßen Glasverbundsysteme können diese Forderungen erfüllt werden.

Wichtig für die zwischen den gehärteten Scheiben einlaminierte Folie ist, dass sie sowohl ein ausgezeichnetes Haftverhalten auf dem Glas zeigt als auch unter Einwirkung von äußeren mechanischen Belastungen möglichst keine Verformung aufweist. Erfüllt wird dies durch ein Folienmaterial mit einen hohen Schub- und Elastizitätsmodul. Die heute typischerweise im Hochbau verwendeten Sicherheitsverbundfolien bestehen aus Polyvinylbutyral (PVB) mit Dicken von 0,38 mm und dessen Vielfachen.

Die Folieneigenschaften werden dabei hauptsächlich durch die Prozessführung und die Art des Laminierens sowie die chemische Modifizierung der Ausgangsmaterials mit z. B. Weichmachern usw. festgelegt. Zur Quantifizierung der Haftungseigenschaften auf dem Glas lassen sich der Pummeltest (vergl. HT Troplast; Glas-Verarbeitung 3(1997)57-59) verwenden. Die typischen Pummelwerte für Bauglas liegen dabei zwischen 7 und 8. Es hat sich überraschenderweise gezeigt, dass bei Pummelwerten bevorzugt im Bereich von 9 bis 10 und Foliendicken bevorzugt im Bereich von 0,38 mm bis 1,52 mm eine besonders gute zusätzliche mechanische Kopplung der Einzelgläser möglich wird. Dadurch können in vorteilhafter Weise die Dicken der Einzelgläser und somit das Gesamtgewicht der Glasverbünde noch weiter reduziert werden.

### Ausführungsbeispiel 2

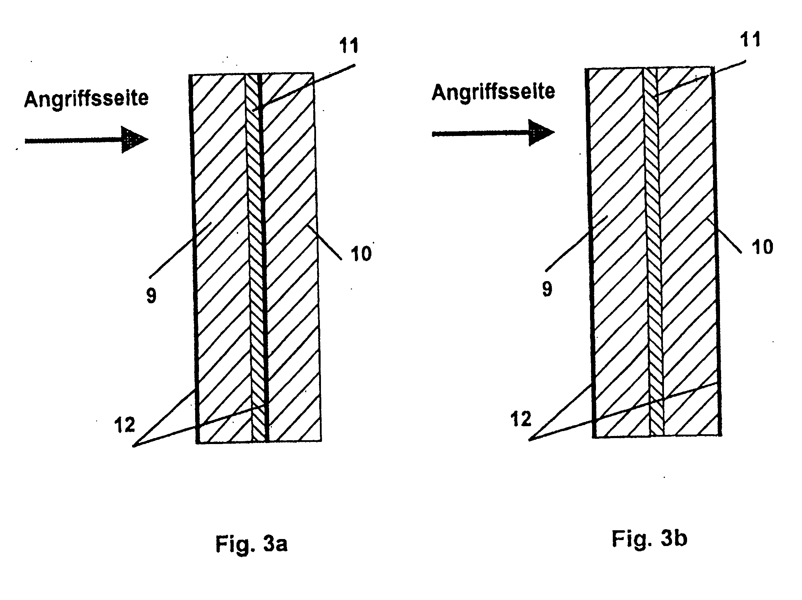

Die Verbund-Sicherheitgläser wurden entsprechend der weiter oben beschriebenen Verfahrensschritte aus chemisch vorgespanntem Glas hergestellt und unter den in Ausführungsbeispiel 1 erläuterten Bedingungen geprüft. Die zinnhaltigen Glasoberflächen 12 (auch Bad- bzw. Zinnseite genannt) der chemisch vorgespannten Gläser 9 und 10 wurden nun so angeordnet, dass diese stets zur Belastungsangriffsseite hin ausgerichtet waren. Der entsprechende Glasaufbau ist in Figur 3 wiedergegeben.

Überraschenderweise hat sich bei dieser Anordnung der zinnhaltigen Glasoberflächen gezeigt, dass sich die Belastungsgrenzen des gesamten Glasverbundes noch deutlich erhöhen lassen. Es konnten weitere Steigerungen der Belastungsgrenzen um mindestens 30 bis 50 % erreicht werden. Dies ist zum einen darauf zurückzuführen, dass die nur wenige Nanometer dicke Zinnschicht gewissermaßen als Diffusionsbarriere während des Härtens mittels Ionenaustauschverfahren wirkt. Wie aus den EPMA-Untersuchungen hervorgeht, können die zinnhaltigen Glasseiten eine um mehr als 2 Gew.-% geringere K₂O-Konzentrationen im Oberflächenbereich aufweisen. Darüber hinaus wurde festgestellt, dass die K⁺-Ionen auf der Zinnseite mitunter auch weniger tief in das Gas eindringen können. Durch diese Konzentrationsunterschiede entsteht an den Glasoberflächen eine Asymmetrie in den erzeugten Druckspannungen. An der zinnfreien Glasoberfläche werden dadurch um ca. 5 bis 10 % höhere Biegespannungswerte erreicht, so dass vor allem die dort durch die äußeren Belastungen erzeugten Zugspannungen besser kompensiert werden können.

Im Ergebnis der Versuchsreihen hat sich als ein besonderer Vorteil herausgestellt, dass sich bei Anordnung der zinnhaltigen Glasoberflächen zur Belastungsseite hin die Schankungen und Toleranzen der mittleren Grenzbelastbarkeitswerte deutlich vermindern ließen. Mit der erfindungsgemäßen Anordnung konnten Schwankungsbereiche von kleiner 10 % erreicht werden.

Andererseits wurde festgestellt, dass an der Zinnseite der Gläser deutlich größere Mikrodefektdichten (ultrafeine Verletzungen der Glasoberfläche wie z. B. Mikrorisse usw.) mit geometrischen Abmessungen im µm-Bereich vorhanden sind. Die Ursache hierfür ist vor allem in den mechanischen Beschädigungen der Glasoberfläche infolge des Handlings, Transportes usw. direkt bei der Herstellung bzw. der Verarbeitung des noch nicht vorgespannten Glases zu sehen. Es ist bekannt, dass derartige Mikrodefekte zu einem frühzeitigen Versagen des Glases bei mechanischen Zugbelastungen führen können. Da nun mindestens die defektreichere Zinnseite erfindungsgemäß zur Belastungsangriffsseite hin angeordnet ist (vergl. Fig. 3a und 3b), unterliegt sie im Belastungsfall (Wind- und/oder Wasserdruck) nur einer weniger kritischen Druckspannung. Eine frühzeitige Zerstörung des Glasverbundes lässt sich somit vermeiden.

Als ein weiterer Vorteil der erfindungsgemäßen Anordnung hat sich erwiesen, dass sich damit auch die Langzeitstabilität deutlich verbessern lässt. Wie aus den durchgeführten Klimaund Alterungstests an vorgespannten Einzelscheiben hervorgeht, kann es bei korrosivem Einwirken von salzhaltigen und/oder basischen Umgebungsbedingungen - wie sie im Schiffbau vorliegen - sogar dazu kommen, dass die Zugspannungen an der Oberfläche der chemisch vorgespannten Gläsern teilweise wieder abgebaut werden. Dies lässt sich dadurch erklären, dass unter diesen äußeren Bedingungen die ursprünglich beim Ionenaustausch gezielt eindiffundierten Kaliumionen partiell wieder aus dem Glas herausgelöst werden bzw. auch andere Ionen in die Oberfläche des Glases eindiffundieren können. Jedoch hat sich vorteilhafterweise gezeigt, dass sich bei der erfindungsgemäßen Anordnung der Zinnschichten entspr. Figur 3a und 3b diese Ermüdungserscheinungen deutlich verringern lassen.

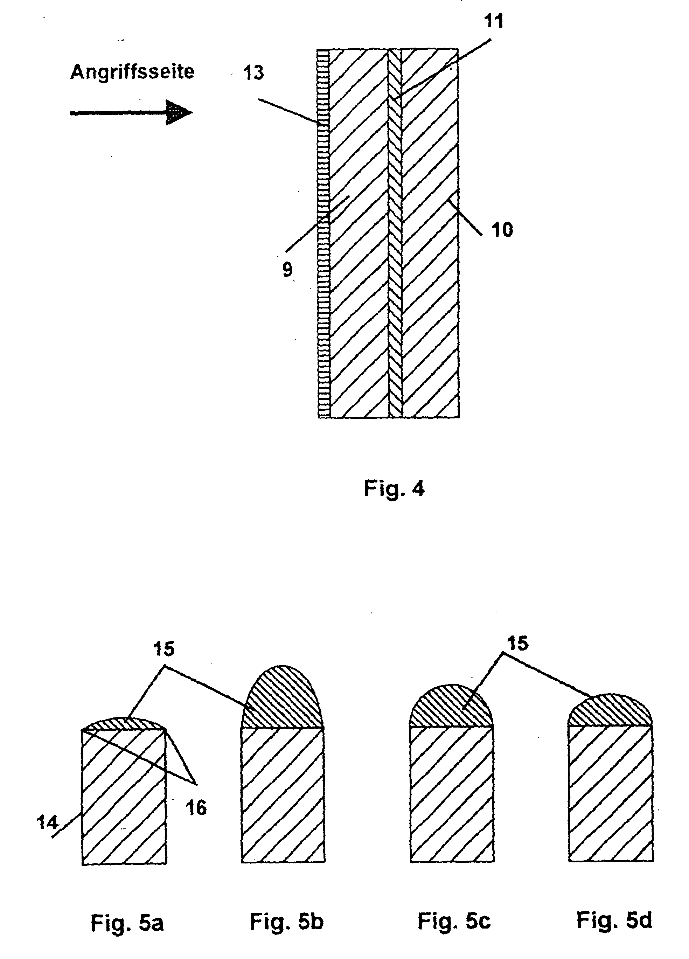

In einer weiteren beispielhaften Ausführung wurde auf der nach außen hin gerichteten Seite eine zusätzliche Diffusionsbarriere 13 mittels Beschichtung aufgebracht (vergl. Figur 4). Als geeignete Beschichtungen erwiesen sich transparente bzw. semitransparente Schichten mit einer hohen Packungsdichte, guter Korrosionsstabilität und/oder hoher mechanischer Härte. Besonders geeignet sind Metalloxide, -nitride, -oxynitride, -karbide, -boride usw. wie z. B. TiO₂, SiO₂, Al₂O₃, ZrO₂, Cr₂O₃, Ta₂O₅, ZnO, SnO₂, CeO₂, SiOₓN_{y}, TiN, Si₃N₄, BN, TiCN, SiC, TaC, TiC, ZrC, ZrC, B₄C, ZrB₂ usw. bzw. Kombinationen aus diesen. Von ganz besonderem Vorteil erwies sich die Aufbringung dünner SiO₂- bzw. Al₂O₃-Schichten, da diese zu den vorgespannten Gläsern vergleichbare optische Eigenschaften haben und somit kaum für das Auge sichtbar sind. Für eine Barrierenwirkung sind schon Schichtdicken von wenigen Nanometern, bevorzugt kleiner 20 nm, ausreichend. Aber auch größere Schichtdicken können Verwendung finden, jedoch sind in diesem Fall die Interferenzerscheinungen zu berücksichtigen. Die Herstellung der Schichten oder Schichtpakete kann mittels der aus dem Stand der Technik bekannten vakuumgestützten Verfahren wie thermische Verdampfung, Kathodenzerstäubung und/oder Plasmabeschichtung usw. erfolgen. Aber auch nasschemische Verfahren entsprechend dem Sol-Gel-Verfahren oder Dip-Coating usw. sind verwendbar. Wichtig ist, dass bei dem jeweiligen Beschichtungsverfahren keine höheren Temperaturen als ca. 200°C einzusetzen sind, da ansonsten die durch Ionenaustausch eingebrachten Druckspannungen wieder verloren gehen. Durch derartige Beschichtungen lassen sich zusätzlich strahlungsselektive (reflexionsmindernde bzw. reflexionserhöhende, farbige usw.) und/oder photokatalytische Eigenschaften erhalten. In einer besonders vorteilhaften Ausführungsform lassen sich durch das Aufbringen von fluorhaltigen Silizium-, Kohlenstoff-, Si-C-Verbindungen mit Dicken vorzugsweise im Bereich 10 nm bis 2 µm oder dergleichen hydrophobe bzw. hydrophile Oberflächeneigenschaften erreichen. Zur Herstellung eignen sich dabei besonders das Sol-Gel-Verfahren sowie Plasmabeschichtungsverfahren.

### Ausführungsbeispiel 3

Um mögliche, vom Glaskantenbereich ausgehende Rissbildungen weitestgehend zu eliminieren, wurden verschiedene Kantenschliffprofile und Poliergüten auf ihre Eignung untersucht.

Die Verbund-Sicherheitsgläser wurden nach dem oben beschriebenen Verfahren produziert und dem Standardtest nach Ausführungsbeispiel 1 unterzogen. Es hat sich überraschenderweise herausgestellt, dass sich die Riss- bzw. Bruchentstehung an der Glaskante fast vollständig durch eine gesamtheitliche Optimierung der Kantenbearbeitung unterbinden lässt.

So ist zum einen besonders vorteilhaft, das Glaskantenprofil so zu gestalten, dass grundsätzlich keine herstellungsbedingten Ecken, Spitzen oder dergleichen auftreten. Auf diese Weise können sich im Belastungsfall lokal keine kritischen Zugspannungen ausbilden. Entscheidend ist, dass die Kantenschliffe eine runde oder ähnliche Form besitzen und mit einem optimierten Krümmungsradius versehen sind. Darüber hinaus ist sowohl dem Übergang zwischen dem Schliffprofil und der Glasoberfläche als auch der Poliergüte eine große Aufmerksamkeit zu schenken.

Figur 5 zeigt hierzu einige Rundschliffe oder ähnliche mit unterschiedlichen Krümmungsradien. Bei Glaskanten mit einem zu großen Krümmungsradius bzw. mit einem zu flachen Bogen (vergl. Figur 5a; r_{Kreis} = d_{Glas}) ergeben sich am Übergang zwischen der Glasoberfläche 14 und der Rundschliffkante 15 exponierte Stellen oder Kanten 16, die bei Angreifen einer äußeren Belastung zur unerwünschten Riss- bzw. Bruchbildung tendieren. Demgegenüber sind zwar "kleinere" Krümmungsradien (siehe Figur 5b) grundsätzlich verwendbar, jedoch können diese bei ungenügender Herstellungsqualität auf Grund der größeren effektiven Oberfläche und der damit verbundenen höheren Anzahl an Mikrodefekten wiederum partiell zu einer Erhöhung der Riss- bzw. Bruchwahrscheinlichkeit beitragen.

Als ganz besonders vorteilhaft hat sich gezeigt, wenn bei den Glaskanten ein Vollbogenprofil (vergl. Figur 5c; r_{Kreis} = d_{Glas}/2) mit einem Krümmungsradius r_{Kreis}, der vorzugsweise genau der Hälfte der jeweiligen realen Glasdicke d_{Glas} entspricht und nur geringfügige Toleranzen von weniger als ± 0,2 mm, bevorzugt weniger als ± 0,1 mm aufweist, zur Anwendung kommt. Zwar ließen sich auch Rundbögen mit größeren Krümmungsradien von vorzugsweise bis maximal der jeweiligen realen Scheibendicke, verwenden, jedoch konnte bei dieser Kantenausführung die maximalen Biegebelastungen nicht erreicht werden. Bei derartigen Kanten (vergl. Figur 5d) sind zusätzlich die Ecken 16 abzurunden. Bevorzugt wird ist in diesem Fall, dass die Rundungen tangential mit einem Winkel von maximal 30°, vorzugsweise kleiner 20°, auslaufen, um eine Beschädigung der Glasoberfläche zu vermeiden. Auch parabolische, elliptische, ovale oder ähnliche Kantenprofile mit vergleichbaren geometrischen Abmessungen sind bei Berücksichtigung der dargestellten Bedingungen verwendbar.

Die beim Schleifen der Kanten unweigerlich entstehenden mechanischen Beschädigungen und Verletzungen der Glasoberfläche müssen durch einen anschließenden Polierprozess unbedingt größtenteils beseitigt werden. Als maßgeblich hat sich dabei herausgestellt, dass die nach dem Polieren verbleibenden Mikrodefekte geometrische Abmessungen im µm-Bereich und darunter sowie nur eine geringe Flächendichte aufweisen. Als besonders vorteilhaft erweisen sich solche Kanten, bei denen mit unbewaffnetem Auge aus einer Entfernung von ca. 0,3 m keine derartigen Defekte oder Rauhigkeiten erkennbar sind. Visuell erkennbare mattierte Stellen sind unbedingt und grundsätzlich zu vermeiden, da diese zu lokalen Störungen im Spannungsprofil und damit zu einem frühzeitigen Versagen des Glases führen können.

Die Glaskantenbearbeitung ist nicht auf Anwendungen in Verbund-Sicherheitsgläsern beschränkt, sondern lässt sich ebenfalls auf monolithisch verwendete Gläser übertragen.

### Ausführungsbeispiel 4

Die Verbund-Sicherheitgläser wurden entsprechend der weiter oben beschriebenen Verfahrensschritte aus chemisch vorgespanntem Glas hergestellt und unter den in Ausführungsbeispiel 1 erläuterten Bedingungen geprüft. Die Glasverbünde wurden zusätzlich in der Weise optimiert, dass sowohl die Anordnung der Zinnseiten (vergl. Ausführungsbeispiel 2) als auch die spezielle Kantenbearbeitung (vergl. Ausführungsbeispiel 3) berücksichtigt wurden.

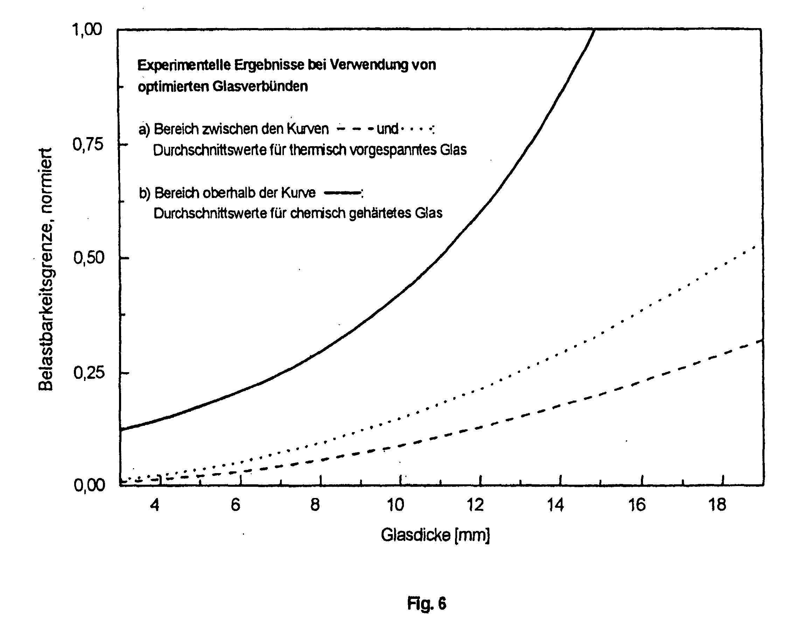

Die erhaltenen Ergebnisse sind schematisch in Figur 6 dargestellt. Aus der Abbildung geht hervor, dass bei gesamtheitlicher Berücksichtigung der erfindungsgemäßen Merkmale die Belastbarkeitsgrenze gegenüber den herkömmlichen Verbund-Sicherheitsgläsern um durchschnittlich 300 bis 500 % und sogar darüber gesteigert werden kann.

### Ausführungsbeispiel 5

Vielfach kommt es in der Praxis darauf an, dass die Glaskonstruktionen dem gesamten Komplex hinsichtlich sicherheitstechnischer, statischer, wärmetechnischer, klimatischer, ästhetischer usw. Anforderungen gerecht werden. Zu diesem Zweck können die Verbund-Sicherheitsglassysteme zusätzlich mit den verschiedensten Funktionen versehen werden, wie z. B. mit strahlungsselektiven Funktionen in Form von IR-Reflexion, Sonnenschutz, UV-Schutz, Anti-Reflex, Farbe, Lichtdurchlässigkeit, Lichtstreuung usw. oder deren Kombinationen.

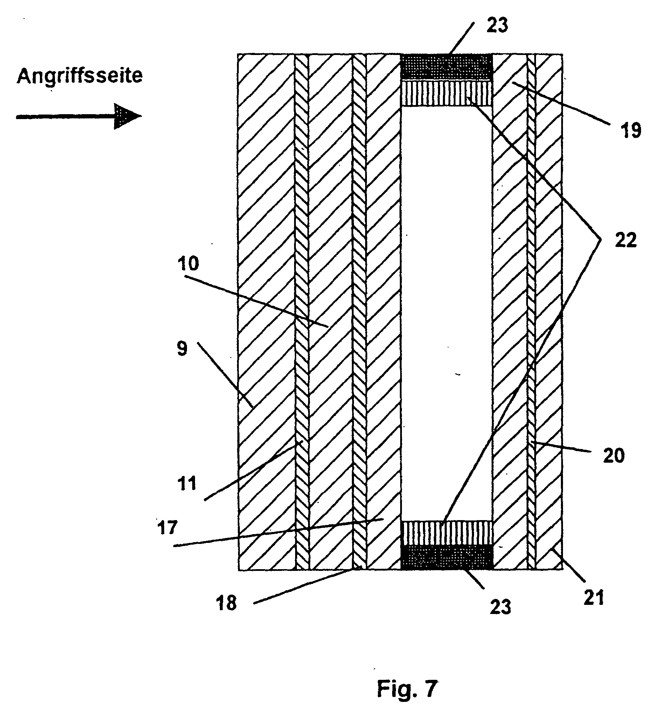

Eine beispielhafte Ausführung ist durch Figur 7 gegeben. Das zur Belastungsangriffsseite hin ausgerichtete Verbund-Sicherheitsglassystem besteht in diesem Beispiel aus den drei gehärteten Einzelgläsern 9, 10 und 17, die durch die Verbundfolien 11 und 18 miteinander verbunden sind. Die Einzelgläser weisen hier jeweils unterschiedliche Dicken auf. Das Verbund-Sicherheitsglas ist in diesem Fall mit einem weiteren Glasverbund, bestehend aus den Einzelgläsern 19 und 21 sowie der Verbundfolie 20, zu einem Isolierglas verarbeitet. Die Einzelgläser des inneren Glasverbundes 19 und 21 müssen dabei nicht unbedingt gehärtet sein. Der Randverbund (Rahmen oder Fassung) besteht hier aus thermoplastischen Material 22 mit zusätzlicher Versiegelung 23, wobei auch die üblichen Isolierglas-Abstandhalter verwendet werden können. In den Scheibenzwischenraum 24 kann wahlweise Luft, Argon, Krypton, SF₆ usw. oder deren Gemische eingelassen werden.

Zum Einbringen der gewünschten zusätzlichen Funktionen lassen sich dann die aus dem Stand der Technik bekannten Methoden und Verfahren verwenden. Von besonderem Vorteil ist das Aufbringen dünner funktioneller Schichten bzw. Schichtsysteme wie z. B. Wärme- und Sonnenschutzschichten, Kombinationen aus denen usw. gleich direkt auf den Einzelgläsern. Dies kann aber auch durch Bedrucken und/oder mechanischer Bearbeitung der Gläser (z. B. vorheriges Sandstrahlen) usw. geschehen.

Besonders geeignet ist die Verwendung gezielt modifizierter Verbundfolien. Beispielhaft lassen sich die Verbundfolien mit einer Sonnenschutz- und/oder Wärmeschutzschicht oder ähnlichem versehen. Dies kann z. B. so erfolgen, dass die eigentliche Verbundfolie wiederum aus einem Verbund aus mindestens zwei thermoplastischen Klebefolien (z. B. Polyethylenterephtalat oder ähnliche) besteht, welche mit den gewünschten funktionellen Schichtsystemen versehen sind.

In weiteren Ausführungsformen lassen sich farbige, mattierte, künstlerisch gestaltete usw. Folien und/oder Spezialfolien mit elektromagnetischer Schutzwirkung oder Netze mit sonstigen Abschirmeigenschaften oder auch Heizdrähte usw. einlaminieren. Durch spezielle Ausführungen sind auch Kombinationen mit Brandschutzgläsern, lichtlenkenden Elementen, Solarzellen, Sonnenkollektoren, aber auch mit schaltbaren Glassytemen (z. B. elektrochrome, thermotrope, phototrope bzw. gasochrome Systeme) usw. möglich.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltung den von Bedeutung sein.

## Patentansprüche

1. Verglasungselement mit:
- einem Verbund-Sicherheitsglas mit mindestens zwei Gläsern (9, 10, 17), die durch mindestens eine Sicherheitsfolie (11, 18) miteinander verbunden sind, wobei eine äußere Seite des Verglasungselements als Belastungsangriffsseite vorgesehen ist,
**dadurch gekennzeichnet, dass**
- die Gläser (9, 10, 17) Floatgläser sind, die jeweils eine zinnhaltige Glasoberfläche aufweisen, wobei die zinnhaltigen Glasoberflächen (12) der Gläser (9, 10, 17) zur Belastungsangriffsseite des Verglasungselementes hin gerichtet sind,
- die Gläser (9, 10, 17) jeweils unterhalb der Glas-Transformationstemperatur gehärtete oder vorgespannte Oberflächen, die durch Oberflächendruckspannungen in das Glasinnere hinein bis zu einer Grenztiefe von weniger als 150 µm charakterisiert sind, und im Glasinneren jenseits der Grenztiefe keine oder nur sehr geringe innere Zugspannungen besitzen, und
- das Verbund-Sicherheitsglas so angeordnet ist, dass es zur Belastungsangriffsseite des Verglasungselementes hin weist.

2. Verglasungselement gemäß Anspruch 1, bei dem die Grenztiefe im Bereich zwischen 10 µm und 80 µm, insbesondere zwischen 20 µm und 50 µm, liegt.

3. Verglasungselement gemäß einem der vorhergehenden Ansprüche, bei dem die Oberflächendruckspannungen zwischen 300 Nmm⁻² und 800 Nmm⁻², insbesondere zwischen 300 Nmm⁻² und 600 Nmm⁻² liegen, und die inneren Zugspannungen kleiner als rd. 30 Nmm⁻² sind.

4. Verglasungselement gemäß einem der vorhergehenden Ansprüche, bei dem eine mehrfache Anordnung von Glasverbünden vorgesehen sind und/oder die Gläser aus planem, gebogenem oder gewölbtem Glas aufgebaut sind.

5. Verglasungselement gemäß einem der vorhergehenden Ansprüche, bei dem die Gläser eine Scheibendicke im Bereich von 4 mm bis 19 mm, insbesondere von 5 mm bis 15 mm, besitzen.

6. Verglasungselement gemäß einem der vorhergehenden Ansprüche, bei dem auf mindestens einer, insbesondere der außen angeordneten Glasoberfläche, eine zusätzliche Diffusionsbarrierenschicht vorgesehen ist, die aus Metalloxiden, -nitriden, -oxynitriden, -boriden oder -karbiden oder Kombinationen aus diesen besteht.

7. Verglasungselement gemäß einem der vorhergehenden Ansprüche, bei dem auf mindestens einer, insbesondere der außen angeordneten Glasoberfläche, zusätzlich eine Beschichtung mit einer strahlungsselektiv und/oder hydrophob bzw. hydrophil und/oder photokatalytisch wirksamen Funktionen vorgesehen ist.

8. Verglasungselement gemäß einem der vorhergehenden Ansprüche, bei dem die Gläser Glaskanten aufweisen, die ein Rundschliffprofil oder ein geometrisch ähnlich gekrümmtes Schliffprofil mit einem mittleren Krümmungsradius besitzen.

9. Verglasungselement gemäß Anspruch 8, bei dem der mittlere Krümmungsradius gleich der Hälfte der jeweiligen realen Glasdicke mit Toleranzen von weniger als ± 0,2 mm, bevorzugt weniger als ± 0,1 mm, ist.

10. Verglasungselement gemäß einem der vorhergehenden Ansprüche, bei dem die Sicherheitsfolie mindestens zu einem Teil auf der Basis von Polyvinylbutyral (PVB) hergestellt ist.

11. Verglasungselement gemäß Anspruch 10, bei dem die Sicherheitsfolie eine Dicke im Bereich von 0,38 mm bis 1,52 mm aufweist.

12. Verglasungselement gemäß einem der vorhergehenden Ansprüche, das ein Fenster- oder Rahmenelement bildet.

13. Verglasungselement gemäß einem der vorhergehenden Ansprüche, das einen inneren Glasverbund (19, 21) enthält, mit dem ein Isolierglas gebildet wird.

14. Verglasungselement gemäß einem der vorhergehenden Ansprüche, bei dem die Gläser (9, 10, 17, 19, 21) mit funktionellen Beschichtungen und/oder funktionellen Folien (11, 18, 20) versehen sind.

15. Verwendung von Verglasungselementen gemäß einem der Ansprüche 1 bis 14 im Schiff- und Yachtbau, im Hochhausbau, für Brüstungen, für Über-Kopf-Verglasungen, für Brandschutzgläser und zur Herstellung begehbaren Glases.

## Claims

1. Glazing element with:
- one laminated safety glass with at least two panes of glass (9, 10, 17), connected with one another by at least one safety foil (11, 18), with one of the outer sides of the glazing element being provided as a load attack side, wherein
- the panes of glass (9, 10, 17) are float glasses, each manifesting a glass surface containing tin, the glass surfaces containing tin (12) of the panes (9, 10, 17) being pointed to the load attack side of the glazing element,
- each of the panes (9, 10, 17) possesses surfaces hardened or pre-tensed below the glass transformation temperature, **characterised by** stresses penetrating into the glass volume up to a boundary depth of less than 150 µm, and possesses no or only very slight internal tensile stresses in the interior of the glass beyond the boundary depth, and
- the laminated safety glass is arranged in such a way that it points towards the load attack side of the glazing element.

2. Glazing element according to Claim 1, wherein the boundary depth is in the range between 10 µm and 80 µm, preferably between 20 µm and 50 µm.

3. Glazing element according to one of the preceding claims, wherein the surface compressive stresses are between 300 Nmm⁻² and 800 Nmm⁻², preferably between 300 Nmm⁻² and 600 Nmm⁻², and the interior tensile strains are lower than approx. 30 Nmm⁻².

4. Glazing element according to one of the preceding claims, wherein a multiple arrangement of glass compounds is provided and/or the panes are constructed of flat, bent or curved glass.

5. Glazing element according to one of the preceding claims, wherein the panes manifest a pane thickness in the area from 4 mm to 19 mm, preferably 5 mm to 15 mm.

6. Glazing element according to one of the preceding claims, wherein an additional diffusion barrier layer comprising metal oxides, nitrides, oxynitrides, borides or carbides or combinations thereof has been provided on at least one glass surface, preferably that arranged on the outside.

7. Glazing element according to one of the preceding claims, wherein a coating with a function effective in a radiation-selective and/or in a hydrophobic or hydrophilic way and/or in a photo-catalytic way is provided on at least one glass surface, preferably that arranged on the outside.

8. Glazing element according to one of the preceding claims, wherein the panes manifest edges possessing a round grind profile or a geometrically similar curved grind profile with a mean radius of curvature.

9. Glazing element according to Claim 8, wherein the mean radius of curvature is equal to half the real glass thickness in question with tolerances of less than ± 0.2 mm, preferably less than ± 0.1 mm.

10. Glazing element according to one of the preceding claims, wherein at least one part of the safety foil is produced on the basis of polyvinyl butyral (PVB).

11. Glazing element according to Claim 10, in which the safety foil manifests a thickness in the range from 0.38 mm to 1.52 mm.

12. Glazing element according to one of the preceding claims, wherein it forms a window or frame element.

13. Glazing element according to one of the preceding claims, wherein it contains an inner glass compound (19, 21) with which an insulating pane is formed.

14. Glazing element according to one of the preceding claims, wherein the panes (9, 10, 17, 19, 21) are provided with functional coatings and/or functional foils (11, 18, 20).

15. Use of glazing elements according to one of the Claims 1 to 14 in ship and yacht building, in building blocks of flats, for parapets, for overhead glazings, for fire-protection glass and for the production of passable glass.

## Revendications

1. Élément de vitrage avec :
- un verre feuilleté de sécurité composé d'au moins deux verres (9, 10, 17), reliés entre eux par au moins un film de sécurité (11, 18), une face extérieure de l'élément de vitrage étant prévue comme face d'application de la charge, **se caractérisant par le fait que**
- les verres (9, 10, 17) sont des verres flottés dont une surface est stannifère, les surfaces stannifères (12) des verres (9, 10, 17) étant orientées vers la face d'application de la charge,
- les verres (9, 10, 17) possèdent des surfaces respectivement trempées ou précontraintes en dessous de la température de transformation du verre, surfaces **caractérisées par** une profondeur limite pouvant aller jusqu'à moins de 150 µm à l'intérieur du verre sous l'effet de contraintes de compression de surface, et qui au-delà de la profondeur limite à l'intérieur du verre ne possèdent que de très faibles ou pas de contraintes normales positives, et
- le vitrage feuilleté de sécurité est disposé de sorte qu'il s'oriente vers la face d'application de la charge de l'élément de vitrage.

2. Élément de vitrage conformément à la revendication 1 pour lequel la profondeur limite se situe entre 10 µm et 80 µm, en particulier entre 20 µm et 50 µm.

3. Élément de vitrage conformément à l'une des revendications précédentes pour lequel les contraintes de compression de surface se situent entre 300 Nmm⁻² et 800 Nmm⁻², en particulier entre 300 Nmm⁻² et 600 Nmm⁻², et les contraintes normales positives sont inférieures à environ 30 Nmm⁻².

4. Élément de vitrage conformément à l'une des revendications précédentes pour lequel est prévue une disposition multiple des couches de verre et/ou les verres sont constitués de verre plan, bombé ou galbé.

5. Élément de vitrage conformément à l'une des revendications précédentes pour lequel les verres ont une épaisseur de vitre qui se situe entre 4 mm et 19 mm, en particulier entre 5 mm et 15 mm.

6. Élément de vitrage conformément à l'une des revendications précédentes pour lequel est prévue une couche barrière de diffusion supplémentaire sur au moins une des surfaces en verre, en particulier sur la surface en verre placée à l'extérieur, couche qui se compose d'oxydes métalliques, de nitrures métalliques, d'oxynitrures métalliques, de borures métalliques ou de carbures métalliques ou de combinaisons de ces éléments.

7. Élément de vitrage conformément à l'une des revendications précédentes pour lequel sur au moins une des surfaces en verre, en particulier sur la surface en verre placée à l'extérieur, une couche est munie de fonctions sélectives de radiation et/ou hydrophobe ou bien hydrophile et/ou actives par photocatalyse.

8. Élément de vitrage conformément à l'une des revendications précédentes pour lequel les verres présentent des arêtes qui possèdent un profil poli rond ou un profil poli courbe à géométrie similaire avec un rayon de courbure moyen.

9. Élément de vitrage conformément à la revendication 8 pour lequel le rayon de courbure moyen est égal à la moitié de l'épaisseur réelle respective des verres avec des tolérances inférieures à ± 0,2 mm, de préférence inférieures à ± 0,1 mm.

10. Élément de vitrage conformément à l'une des revendications précédentes pour lequel le film de sécurité est fabriqué du moins partiellement à base de polyvinylbutyral (PVB).

11. Élément de vitrage conformément à la revendication 10 pour lequel le film de sécurité présente une épaisseur entre 0,38 mm et 1,52 mm.

12. Élément de vitrage conformément à l'une des revendications précédentes, qui forme un élément de fenêtre ou de châssis.

13. Élément de vitrage conformément à l'une des revendications précédentes, qui contient un composite de verre intérieur (19, 21) avec lequel il forme un vitrage isolant.

14. Élément de vitrage conformément à l'une des revendications précédentes pour lequel les verres (9, 10, 17, 19, 21) sont munis de couches fonctionnelles et/ou de films fonctionnels (11, 18, 20).

15. Emploi des éléments de vitrage conformément à l'une des revendications 1 à 14 dans la construction navale, de yachts et de tours d'immeubles, pour les balustrades, vitrages de plafond, verres coupe-feu et pour la fabrication de verres praticables.
